# EUROPEAN PATENT APPLICATION

(11) **EP 2 827 135 A1**
(43) Date of publication of application: **21.01.2015**
(21) Application number: 14177760.7
(22) Date of filing: 21.07.2014
(51) Int. Cl.: G01N 23/04, H01J 35/30, H05G 1/52

(54) **X-ray testing device for material testing and method for the generation of high-resolution projections of a test object by means of x-ray beams**

(30) Priority: 19.07.2013 DE 102013107736
(71) Applicant: GE Sensing & Inspection Technologies GmbH, 50354 Hürth (DE)
(72) Inventor: Schmitt, Andreas, 31515 Wunstorf (DE); Aslami, Farid John, 31515 Wunstorf (DE); Friedemann, Reinhard, 31515 Wunstorf (DE)
(74) Representative: Illingworth-Law, William Illingworth

(57) **Abstract**

The invention relates to an X-ray testing device (1) for material testing for generating high-resolution geometric projections of a test object (100) by means of X-ray beams. It comprises a highly focusing X-ray source (10) comprising a rotary anode assembly (20) with a rotatably mounted anode plate (22) and an anode plate drive (28) which is configured to set the anode plate (22) into a rotary motion. Furthermore, it comprises an electron gun (40) which is configured to generate a focused electron beam (42), and an electron beam control unit (50), which comprises an electron beam deflecting unit (52) and a control unit (54), and which is configured to control the point of incidence (44) of the electron beam (42) generated by the electron gun (40) on the anode plate (22). Finally, a bracket (102) for a test object (100) is provided, with the position of the bracket (102) relative to the rotary anode assembly (20) being fixed or capable of being fixed. Furthermore, the invention relates to a method for generating high-resolution geometric projections of a test object (100) by means of X-ray beams, using an X-ray testing device according to the invention.The principle underlying the invention is to compensate for the motion of the focal point incident on the anode plate (22) which results from mechanical instabilities and/or thermal expansion of said anode plate (22).

## Description

The invention relates to the field of material testing using X-radiation. In particular, it relates to the generation of high-resolution, magnified projections of a test object by means of X-ray beams.

High-resolution magnified projections of a test object by means of X-ray beams can be generated by disposing the test object in front of as point-shaped an X-ray source as possible. The X-radiation emitted by the X-ray source penetrates the test object and there undergoes an attenuation that is dependent on the local material properties. A, for example, two-dimensionally extending, for instance plane, detector for X-radiation, which detects in a spatially resolved manner the X-radiation that has penetrated the test object, is disposed behind the test object. Such a detector can be an X-ray film, which reacts to incident X-radiation by darkening, however, it can also be modem semiconductor detectors that comprise a plurality of radiation-sensitive cells/pixels in which incident X-radiation is converted into an electrical output signal. For example, X-ray sensors built using CMOS technology, in which X-radiation incident upon an scintillator layer is converted into visible light, which is subsequently collected by an array of CMOS technology photosensitive cells and converted into electrical signals, are known from the prior art. Furthermore, spatially resolving, two-dimensionally extending X-ray detectors using CCD technology are known from the prior art, in which incident X-radiation is directly, i.e. without conversion into visible light, converted into electrical signals.

The X-radiation incident upon the detector, which is preferably two-dimensionally resolving, represents a magnified silhouette of the radiation-penetrated test object, with the attainable magnification being determined by the distance, on the one hand, between the X-ray source and the workpiece and, on the other hand, between the X-ray source and the detector. Apart from the resolution of the X-ray detector used (which is determined, for example, by the granularity of an X-ray film or the size of the pixels of a digital X-ray detector), the extent of the X-ray source substantially determines the obtainable resolution. In practice, point-shaped X-ray sources do not exist; rather, the focal spot of the X-ray tube, which is generally used in the prior art for generating X-ray beams, has a finite extent. The smaller the extent of the focal spot, the more defined the cast shadow produced by the test object becomes, and the higher the resolution becomes that can be obtained therewith.

In order to obtain higher resolutions, X-ray tubes were developed in the recent past which work with a fixed anode on which a finely focused beam of accelerated electrodes is incident. In principle, focal spot sizes in the range of nanometers can be produced in this case, so that, theoretically, X-ray sources having an extent in the nanometer range could be realized. In practice, however, the problem arises that sufficient X-ray intensities have to be generated in order to be able to work with practical exposure times. This requires high electron currents on the anode. However, only about 1% of the energy transmitted onto the anode in the process is converted into X-radiation; the remaining 99% of the deposited radiation energy in the end leads only to the anode heating up. A very strong focusing of the electron beam with high electron currents at the same time leads to a local overheating of the anode, which can lead to damage to the anode surface. The consequence of this fact, which depends on the thermal properties of the target, is that in the case of fixed anodes, an arbitrary reduction of the focal spot diameter is not possible while simultaneously maintaining the electron current. As a rule, focal spot sizes of one micrometer and slightly less are therefore being used. Using such microfocus X-ray tubes, magnified pictures of a test object can be produced in which the attainable magnification factor is in the range of 500 to 5000. At the same time, such intensities can be obtained that exposure times of a few seconds suffice for producing high-contrast pictures of the test object. The limiting factor in this case is, of course, the material thickness of the test object to be inspected.

If X-ray tubes with rotary anodes are used for generating X-radiation, the electron beam moves on a track on the anode surface, so that the local thermal stress of the anode is reduced. As a matter of principle, therefore, higher electron beam current densities and thus higher X-radiation intensities with the same focus size can be produced using rotary anodes. However, rotary anode X-ray tubes suffer from the inevitable problem that mechanical tolerances of the rotary anode as well as its mounting lead to the position of the focal spot varying in space. Furthermore, most rotary anode X-ray tubes known from the prior art do not enable the setting of a small distance between the focal spot and the test object, because the target is generally under high voltage and the insulation spacing from the exit window is thus limiting. Whereas the latter property leads to the attainable magnification generally being significantly lower than when using microfocus X-ray tubes, the former property moreover causes a high degree of unsharpness of the projection time-integrated on the detector. For this reason, rotary anode X-ray tubes are not commonly used to this day in the field of high-magnification material testing.

From DE 19 832 972 A1, an X-ray emitter is known which comprises an X-ray tube having a rotary anode. A focused electron beam generated by an electron gun is incident upon a rotating surface of the rotary anode, so that X-radiation emanates from the focal spot on the rotary anode. The X-ray emitter is now configured in such a way that the position of the focal spot on the rotary anode can be changed at high speed. To this end, the X-ray emitter comprises detector means which detect the actual position of the focal spot on the rotary anode, which is compared to a predetermined required position. Using suitable deflecting means, the electron beam is tracked in such a way that the position of the focal spot coincides with the predetermined required position. From the US patent specification US 4,458,180 A cited in the above-mentioned document, it is known that a change of the focal spot position on the rotary anode can be advantageous for providing a continuous X-ray source that can be used particularly in the field of computer tomography with X-rays.

DE 4 129 294 A1, in which the electron beam in a comparably structured X-ray tube with a rotary anode is periodically varied back and forth between different extreme positions on the rotary anode in order to prevent a thermal overloading of the rotary anode, deals with a similar technical problem. This X-ray source is also intended for use in the field of X-ray computer tomography in the medical field. It is proposed to couple the frequency of the periodic change of the focal spot position on the rotary anode to the rotational frequency of the rotary anode.

An X-ray tube with a rotary anode is also known from DE 19 639 920 A1, with which a special quadrupole assembly in the electron-optical system is used in order to be able to change the position of the focal spot on the rotary anode without the occurrence of a deformation of the beam cross section.

A comparable suggestion is also apparent to the person skilled in the art from WO 2007/135614 A1, which proposes to periodically change, in an X-ray tube with a rotary anode, the position of the focal spot on the rotary anode depending on the rotation angle of the rotary anode. This is to serve to be able to change very rapidly the intensity of the generated X-ray beam, which in turn is supposed to be used, for example, in medical X-ray computer tomography.

It would be desirable to provide an X-ray testing device for material testing, which is suitable for generating high-resolution geometric projections of a test object by means of X-ray beams. In this case, this X-ray testing device is supposed to permit the realization of a significantly improved resolution and/or higher intensity of the generated X-radiation with comparable magnification conditions. Furthermore, it would also be desirable to provide a method for generating high-resolution geometric projections of a test object by means of X-ray beams, as well as an advantageous method for setting up such an X-ray testing device.

The present invention provides an X-ray testing device having the features of claim 1, a method for generating high-resolution projections of a test object according to claim 18, as well as a method for setting up an X-ray testing device according to claim 19.

The X-ray testing device according to the present disclosure is intended for material testing, and serves for generating high-resolution geometric projections of a test object by means of X-ray beams. It comprises a highly focusing X-ray source comprising a rotary anode assembly. This rotary anode assembly comprises at least one rotatably mounted anode plate and an anode plate drive which is configured to set the anode plate into a rotary movement. Furthermore, the X-ray source comprises an electron beam generator which is configured to generate a preferably focused electron beam. Typically, the electron beam generator for microfocus tubes comprises an electron gun consisting, for example, of a hot cathode and electrodes for generating an accelerating electrical field as well as an electron-optical system for focusing the generated electron beam.

Moreover, the X-ray source of the X-ray testing device according to the present disclosure comprises an electron beam control unit. The latter comprises an electron beam deflecting unit and a control unit. The electron beam deflecting unit comprises means that are suitable for controlling, i.e. deflecting suitably, the electron beam generated by the electron gun. This can be, for example, coils or electrodes for generating magnetic or electrical fields or combinations thereof. The electron beam deflecting unit is provided to control the point of incidence of the electron beam generated by the electron beam generator on the anode plate. In the process, the electron beam deflecting unit is controlled by the control unit.

Furthermore, the X-ray testing device comprises a bracket for a test object, with the position of the bracket relative to the rotary anode assembly being either fixed or variable, but capable of being fixed. As an example for a test object, mention may be made of a populated, optionally multi-layered circuit board. Because of the very high X-ray intensities attainable with it, the X-ray testing device according to the present disclosure is also suitable for testing in a non-destructive manner test objects with a greater material thickness, or test objects that are moved past the X-ray testing device.

The present disclosure now provides that the rotary anode assembly of the X-ray testing device comprises a rotational angle encoder that is configured to detect the current rotation angle during a rotary movement of the anode plate. In this case, a variety of rotational angle encoders is known from the prior art, which, as a matter of principle, can be used within the context of the present disclosure. Optical incremental counters may be mentioned by way of example, or also magnetic field sensors that respond to a changing magnetization of, for example, an anode plate shaft. Furthermore, use can be made of rotational angle encoders that register only the completion of a full 360-degree rotation of the rotary anode, wherein the respectively current rotation angle can be calculated with great accuracy knowing the anode plate rotational speed.

Furthermore, the control unit of the electron beam control unit is configured for controlling the electron beam deflecting unit depending on the detected rotation angle of the anode plate in such a way that the change of the position in space of the X-ray focus caused by the rotating anode plate relative to a reference point P on the bracket for the test object, which is located in a fixed position, is minimized.

As was already explained in the introductory part, a change of the distance between the X-ray focus, i.e. the point of incidence of the electron beam on the anode plate, and the test object to be radiation-penetrated causes a cast shadow of the test object on a fixed detector that changes over time. Due to the finite time-resolution of the detector used, this leads to an unsharpness of the recorded projection. If, on the other hand, the distance between the X-ray focus and the test object is kept constant and if only the angular position is changed of the connecting line between the X-ray focus and a reference point P, which may lie, for example, on the bracket of the test object or on the test object itself, then this does not lead to a change of the resulting magnification in the cast shadow, but does cause a lateral displacement of the cast shadow on the, for example, two-dimensionally extending, detector. Therefore, this effect is also disadvantageous with regard to the attainable resolution in the cast shadow.

Therefore, a minimization of the positional change of the point of incidence on the anode plate within the sense of the independent device claim is to be understood in the sense that the position of the point of incidence is set by means of the electron beam control unit in such a way that as low a level of unsharpness as possible of the geometric projection recorded by the detector is obtained over a typical exposure time of the detector. Typical exposure times of the detector can be, for example, required exposure times of an X-ray film, or the integration times of the individual pixels of a digital X-ray sensor. In the image processing field, it is also known that the quality of static images of an object can be improved if an averaging is carried out over a plurality of individual images. In a preferred development, the stabilization therefore preferably takes place over a time interval including a plurality of static individual pictures, over which an averaging is to be carried out within the context of a statistical image evaluation. If the positional change of the point of incidence is minimized over a full revolution of the anode plate, this constitutes a preferred special case.

A suitable controlling algorithm for the electron beam control unit in particular consists of minimizing the positional change of the point of incidence in such a way that fluctuations in the distance between the point of incidence and the reference point P are minimized. As was already mentioned, the reference point can in this case lie on the bracket for the test object; in particular, it can be disposed on the edge of a test object located in the bracket, or in the geometric center of the edge of a test object located in the bracket. In principle, it is left at the discretion of the person skilled in the art himself to select, within the framework of his expert knowledge, a reference point P that to him appears particularly suitable for the given testing task.

Another advantageous algorithm provides the minimization of the positional change of the point of incidence by means of the electron beam control unit in such a way that fluctuations of the angular position of the connecting line between the point of incidence and the above-mentioned reference point P in space are minimized.

In a particularly preferred development, the controlling algorithm provides to control the control unit in such a way that the point of incidence is moved along a straight line. This is advantageous particularly when the controlling algorithm provides to minimize fluctuations of the angular position of the connecting line between the point of incidence and the reference point in space.

In principle, the aforementioned controlling algorithms are available to the person skilled in the art for carrying out a special material testing task, wherein, in certain cases, a combination of several of the aforementioned controlling algorithms can also lead to an optimum result within the sense of a minimized unsharpness of the geometric projection of the test object on the detector.

In another preferred development, the control unit of the electron beam control unit comprises a storage unit. Information for controlling the electron beam deflecting unit depending on the rotation angle of the anode plate is stored in this storage unit. For example, it is thus possible to store in the storage unit, for a plurality of individual rotation angles, a rotation angle-specific set of parameters for the control according to the present disclosure of the control unit. If it is possible to state the rotation angle-dependent change of the set of parameters for the optimized control of the control unit in the form of a closed function, then the latter can also be stored in the storage unit.

In contrast to the X-ray tubes with a rotary anode known from the prior art, it was found to be advantageous if, in the X-ray testing device according to the present disclosure, the axis of rotation D includes an inclination angle Θ with the direction of movement of the electron beam incident upon the anode plate which is no greater than 40 degrees, preferably no greater than 35 degrees, and in particular no greater than 30 degrees. Depending on the design of the electron gun and the electron beam deflecting unit, smaller inclination angles Θ can also be advantageous. In the rotary anode X-ray tubes known from the prior art, the inclination angle Θ is frequently zero degrees, i.e. the X-ray beam incident upon the anode plate is oriented parallel to the axis of rotation of the anode plate, or the inclination angle Θ is a few degrees, generally less than 10 degrees. The aforementioned geometry of the X-ray source according to the present disclosure permits keeping the minimum distance between the anode plate and the test object very small, which results in advantages with respect to the attainable magnification ratio of the geometric projection.

This also applies if the electron beam is not incident upon one of the covering surfaces of the generally disc-shaped anode plate, as is customary in the prior art, but upon the jacket surface of a disc-shaped or frustoconical anode plate. Here, a guidance of the incident electron beam and the emitted X-radiation can be realized which is reminiscent of a grazing incidence in the field of optics.

In this configuration, in which the electron beam is incident on the jacket surface of the disc-shaped anode plate at a shallow angle, the rotary anode assembly according to the present disclosure can take the place of a fixed anode, in particular the place of a thin fixed anode, which is used in a radiation penetration geometry. In particular, it is possible to retrofit an existing X-ray testing device with a fixed anode with a rotary anode assembly according to the aforementioned present disclosure, in order to realize higher radiation intensities.

In another advantageous embodiment of the X-ray testing device according to the present disclosure, at least the anode plate of the rotary anode assembly is disposed in a dismountable, vacuum-tight anode plate housing comprising an exit window for the generated X-radiation. In this case, the exit window advantageously permits the exit of a divergent X-ray beam with a, for example, round cross section with an opening angle α of at least 10 degrees, preferably at least 30 degrees, and particularly preferably 40 degrees or more.

Preferably, the X-ray testing device according to the present disclosure comprises an electron beam generator housing, in which at least the electron gun, in the case of microfocus tubes, the focusing unit, but preferably also the electron beam deflecting unit are disposed. This electron beam generator housing is vacuum-tight and evacuatable via an evacuating unit, e.g. a vacuum pump, connected to, for example, the electron beam generator housing.

Advantageously, the anode plate housing comprises a mechanical interface, via which the anode plate housing can be exchangeably connected in a vacuum-tight manner to the electron beam generator housing. To this end, the electron beam generator housing advantageously also comprises a mechanical interface for connecting the anode plate housing, but at least a suitable sealing surface for connecting the mechanical interface of the anode plate housing to the electron beam generator housing.

In an advantageous development, the anode plate housing and the electron beam generator housing are fluid-connected with each other, so that the interconnected housings can be jointly evacuated via an evacuating unit connected to, for example, the electron beam generator housing.

Other advantages are the result if at least the anode plate is disposed in a dismountable, vacuum-tight anode plate housing connected to a cooling device. This cooling device is designed for heat dissipation from the walls of the anode plate housing. The cooling device can be a passive cooling device, for example in the form of cooling fins formed on the outer face of the anode plate housing. It can also be a device for heat dissipation, for example in the form of a heat pipe. Moreover, it can also be an active cooling device in which, for example, a cooling fluid, such as oil or water, which is conducted in a coolant circuit and cooled through a heat exchanger, flows around the outer wall of the anode plate housing.

A heat exchange between the anode plate, which in operation heats up to temperatures in excess of 1,200°C, and the environment is most frequently effected via the exchange of heat radiation between the surface of the anode plate and the inner wall of the anode plate housing. The efficiency of the heat transfer from the anode plate to the anode plate housing via radiation exchange can in this case be increased if the surface of the anode plate or the inner wall of the anode plate housing or both components are wholly or partially provided with a coating that improves the heat exchange. Corresponding coatings, which also have the required temperature resistance, are known to the person skilled in the art from the prior art. In this case, it may in particular be provided that the surface of the anode plate is only partially provided with such a coating, so that the region in which the electron beam is incident upon the anode plate remains uncoated.

A further improvement of the heat dissipation from the anode plate is attained if the latter is supported by fluid bearings that are in heat-conducting contact with a body whose outer surface is in fluidic heat exchange with the environment, for example via the ambient air or a cooling fluid. This body can be, in particular, the anode plate housing itself. Such bearings are also referred to as hydrodynamic bearings, in which, for example, oil or also air is disposed as a lubricant between two bearing surfaces, which as such do not touch each other.

A particularly compact structure of the rotary anode assembly of the X-ray testing device according to the present disclosure is obtained if the anode plate drive comprises an output shaft which is disposed collinear with the axis of rotation D of the anode plate. It is particularly advantageous if the axis of rotation of the output shaft coincides with the axis of rotation D of the anode plate.

Since the anode plate housing has to be evacuated for operation of the X-ray testing device according to the present disclosure, it is generally advantageous if the anode plate drive is disposed outside the anode plate housing. In this configuration, it is advantageous if the output shaft of the anode plate drive is non-rotatably connected to the anode plate via a vacuum-tight rotary joint. Particular advantages are attained if the vacuum-tight rotary joint simultaneously functions as a rotary mounting for the anode plate. It is particularly advantageous if the rotary joint, which is in direct mechanical and thus thermal contact with the anode plate, or via an interposed anode plate shaft, is configured as a fluid bearing via which a heat transfer from the anode plate to the anode plate housing is possible by thermal conduction. An advantageous method for generating high-resolution, radiation-penetrating, geometric projections of a test object by means of X-ray beams comprises the following method steps:
a. providing an X-ray testing device according to claim 1,
b. disposing the test object in the bracket,
c. radiation-penetrating the test object with X-radiation emanating from the rotating anode plate,
d. detecting the rotation angle of the anode plate and controlling the electron beam deflecting unit depending on the detected rotation angle in such a way that the positional change of the point of incidence of the electron beam on the anode plate relative to a reference point P on the bracket located in a fixed position is minimized.

The X-ray testing device according to the present disclosure and the method according to the present disclosure permit the realization of an at least microfocused high-intensity source for X-radiation, in which both the position of the X-ray source as well as the emission direction have a stability that is considerably higher than the results hitherto obtainable by means of rotary anode X-ray tubes, and which, with regard to radiation stability, approximate the microfocus X-ray tubes with a fixed anode known from the prior art. At the same time, with the same resolution, they permit considerably higher X-ray intensities, so that the inspection of test objects with a greater material thickness or the use of shorter exposure times becomes possible. Thus, completely new fields of application are opened up for high-resolution material testing by means of X-ray beams.

A particularly advantageous method for setting up an X-ray testing device according to claim 8 comprises the following method steps:
a. providing an X-ray testing device according to claim 1,
b. disposing the test object in the bracket,
c. radiation-penetrating the test object with X-radiation emanating from the rotating anode plate,
d. detecting the rotation angle of the anode plate and controlling the electron beam deflecting unit depending on the detected rotation angle in such a way that the positional change of the point of incidence of the electron beam on the anode plate relative to a reference point P on the bracket located in a fixed position is minimized.

The rotation angle-dependent positional change of the point of incidence can, for example, be detected experimentally by experimentally detecting the change of either the distance of the point of incidence from the reference point P, or the positional change of a connecting line between the point of incidence and the reference point in space, or both. This can take place, for example, by image formation on a reference structure, in which the change of the magnification factor and the displacement of the entire image on a two-dimensionally extending detector is detected as a function of the rotation angle of the anode plate. The above-mentioned quantities can be determined therefrom. Given basic assumptions, for example the assumption of a cylindrical shape of the anode plate and a slight offset of the axis of rotation of the anode plate relative to the axis of symmetry, a set of parameters for controlling the electron beam deflecting unit can be determined by way of calculation. By applying this set of parameters, i.e. by applying a "compensation" determined by it, by means of the electron beam deflecting unit, the change of position of the point of incidence on the anode plate is minimized.

Here, it is to be noted again that "minimizing the change of position of the point of incidence" within the context of the present disclosure is to be understood, in particular, to mean that the effect of the unsharpness of the cast shadow of the test object generated on the two-dimensionally extending detector, which is caused by the rotary movement of the anode plate, is minimized by a rotation angle-dependent control of the point of incidence. As was already mentioned, both the influence of the change of direction of the generated X-radiation and the change of the magnification factor of the cast shadow caused by a change of the distance between the point of incidence and the test object must be taken into consideration in this case.

In a particularly preferred embodiment of the aforementioned method, the parameters for controlling the electron beam unit are selected in such a way that, following the application of the compensation, i.e. an active beam control by means of the electron beam deflecting unit in accordance with the selected/stored set of parameters, the point of incidence of the electron beam generated by the electron gun on the anode plate moves along a straight line. Particular advantages result if this straight line substantially coincides with the connecting line between the point of incidence and the reference point.

Other advantages and features of the present disclosure are explained in more detail below with reference to exemplary embodiments. The exemplary embodiments will be explained in more detail with reference to the attached drawing. In the drawing:
Fig. 1: shows a schematic representation of an X-ray testing device according to the invention, operated without the electron beam control according to the invention,
Fig. 2: shows a schematic representation of the X-ray testing device according to the invention from Fig. 1, operated with the electron beam control according to the invention,
Fig. 3: shows a perspective view of the X-ray source of an exemplary embodiment of an X-ray testing device according to the invention, and
Fig. 4: shows a partial sectional view of the X-ray source from Fig. 3.

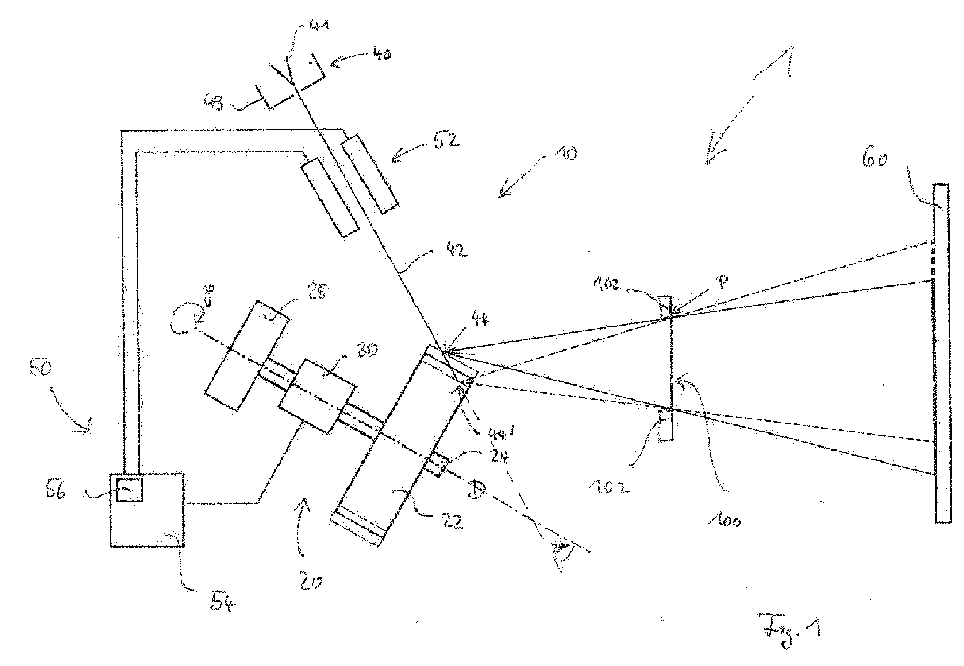

Figure 1 shows a schematic representation of an X-ray testing device 1 according to the present disclosure. The latter comprises an X-ray source 10 with which a magnified geometric projection of a test object 100 retained in a bracket 102 is generated on a two-dimensionally extending detector 60. The X-ray source 10 comprises a rotary anode assembly 20, which comprises an anode plate 22 rotatably mounted on a shaft 24. An anode plate drive 28, whose output shaft is connected collinear with the axis of rotation D of the anode plate, or the shaft 24 connected therewith, is non-rotatably connected to the shaft 24. The anode plate 22 is configured in a disc-shaped manner and consists, for example, of tungsten, with the choice of a suitable material for the anode plate 22 being familiar to the person skilled in the art based on his expert knowledge.

An electron beam 42 is generated by an electron gun 40, the electron gun 40 comprising a hot cathode 41 for generating free electrons that are accelerated and concentrated by a downstream electron-optical system 43 to form an electron beam 42.

If all influences affecting the propagation of the electron beam 42, e.g. electrical or magnetic fields, are shielded off, then the electron beam 42 propagates in a straight line and hits in a point of incidence 44, 44' the jacket surface of the anode plate 22. During the operation of the X-ray testing device 1, the anode plate 22 is set into a rotary motion by the anode plate drive 28, with typical rotational speeds of 50 to 4000 revolutions per minute being realized.

Due to inevitable mechanical tolerances, for example in a mounting of the rotary anode assembly 20 or an eccentric mounting of the anode plate 22 on the shaft 24, both the radial position of the point of incidence 44, 44' relative to the axis of rotation D as well as its lateral position longitudinally of the axis of rotation D changes. This is indicated in an exemplary manner in dashed lines in Figure 1 for two extreme positions of the rotating anode plate 22. The point of incidence 44 denotes the position of incidence of the electron beam 42 on the jacket surface of the anode plate 22 with the maximum radial distance. In contrast, 44' designates the point of incidence at which the smallest radial distance occurs. It is also immediately apparent from Figure 1 that, besides the variation of the radial distance of the points of incidence 44 and 44', there is also a displacement of the point of incidence 44, 44' along the direction of the axis of rotation D, i.e. in the lateral direction.

By way of example, the image formation is now observed when the electron beam 42 is incident upon the jacket surface of the anode plate 22 at the point 44. The point of incidence 44 constitutes a more or less point-shaped source for X-radiation, from which a bundle of beams with an opening angle α (not shown in Figure 1) exits through an exit window 34 (not shown) provided in the anode plate housing 32 (not shown) from the anode plate housing 32 and hits the test object 100 located in the bracket 102. When passing through the test object 100, a material-specific, locally varying attenuation of the X-radiation occurs, which is then detected in a spatially resolved manner by an X-ray detector 60 disposed at a distance from the test object 100. In the exemplary embodiment shown, the X-ray detector 60 is configured as a two-dimensionally resolving, digital X-ray detector with a CMOS design, which has, for example, a resolution of 1024x1024 pixels with a typical edge length of the square detector surface of 20-40 cm. Of course, other detector configurations are also conceivable, in particular a design of the active detector surface as a surface of a spherical segment.

The marginal rays drawn in in continuous lines, which emanate in Figure 1 from the point of incidence 44, indicate schematically the extent of the magnified image of the test object 100 on the active surface of the detector 60, which is produced on the detector 60.

If one now observes the point of incidence 44' which has the smallest radial distance from the axis of rotation D, and again, starting from the point of incidence 44', observes the geometric projection of the test object 100, which is generated on the detector 60, then the generated geometric projection is delimited by the two dashed lines. Obviously, seen over a full revolution of the anode plate 22, a significant displacement of the geometric projection of the test object 100 occurs on the active surface of the detector 60. This displacement in the end leads to an unsharpness of the geometric projection of the test object 100 detected by the detector 60. On the one hand, it is caused by a change of the distance of the point of incidence 44 from the test object 100, which is accompanied by a change of the magnification factor of the geometric projection. On the other hand, it becomes clear from Figure 1 that a change of the lateral position of the point of incidence 44 on the axis of rotation D is accompanied by a displacement of the geometric position of the projection on the detector 60. Due to the finite time-resolving capacity of the detector 60, both effects cause an unsharpness of the X-ray image recorded by the detector 60, which becomes clear particularly when the recorded X-ray image of the test object 100 is integrated over a full revolution of the anode plate 22 or longer. On the one hand, this can be realized by a correspondingly long exposure time of the X-ray detector 60, on the other hand, also by a superposition of a plurality of successive individual images with a higher time-resolution recorded by the detector 60.

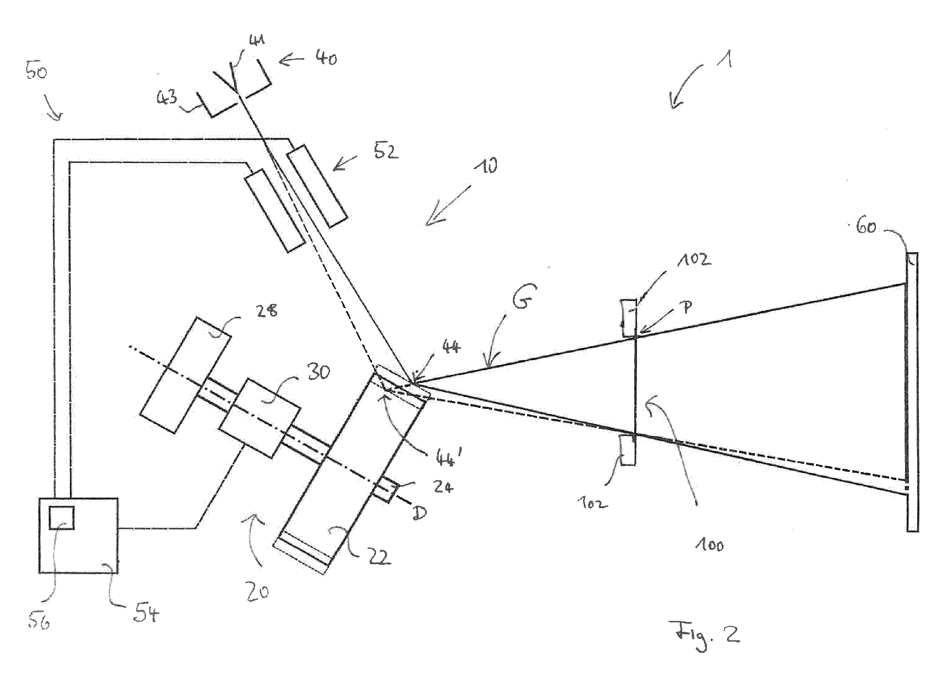

In the operation mode of the X-ray testing device 1 according to Figure 2, the still-provided electron beam control unit 50 is activated, which permits the method according to the present disclosure to be carried out. The electron beam control unit 50 comprises an electron beam deflecting unit 52, which comprises, for example two coils generating magnetic fields. The electron beam 42 passes through this magnetic field on the way to the anode plate 22. Moreover, the electron beam control unit 50 comprises a control unit 54 connected to a rotational angle encoder 30, which detects in a suitable manner the current rotation angle Gamma of the shaft 24 about the axis of rotation D and transmits it to the control unit 54.

Furthermore, a storage unit 56 is provided in the control unit 54, in which a set of parameters is stored for controlling the electron beam deflecting unit 52, in the exemplary embodiment shown, of the coils comprised by it that generate magnetic fields. This set of parameters can be determined, for example, in a previous calibration process according to claim 8.

In this exemplary embodiment, the set of parameters stored in the storage unit 56 was now determined in such a way that the electron beam control unit 50 controls the coils of the electron beam deflecting unit in such a way that the electron beam 42 is actively controlled, in this case particularly its point of incidence 44, 44' on the jacket surface of the anode plate 22. In the particularly preferred embodiment of the method according to the present disclosure shown here, the set of parameters was determined in such a way that the point of incidence 44, 44' moves along a straight line G over a full revolution of the anode plate 22 about its axis of rotation D. In this case, the straight line G is given by the connecting line between the point of incidence 44 and the reference point P, which is disposed on the peripheral enclosure of the test object 100 in the bracket 102. It becomes immediately clear from Figure 2 that in this case, the upper edge of the geometric projection of the test object 100 forming on the X-ray detector 60 does not change its position during the aforementioned control of the point of incidence 44. The dashed line which emanates from the point of incidence 44' and indicates the projection that results starting from the point of incidence 44', in turn marks the second extreme position of the projection of the test object 100 on the X-ray detector 60 that results in this process.

A comparison of the Figures 1 and 2 immediately makes clear the resulting, significantly reduced displacement /change of the projection of the test object 100 on the X-ray detector 60 caused by the process according to the present disclosure.

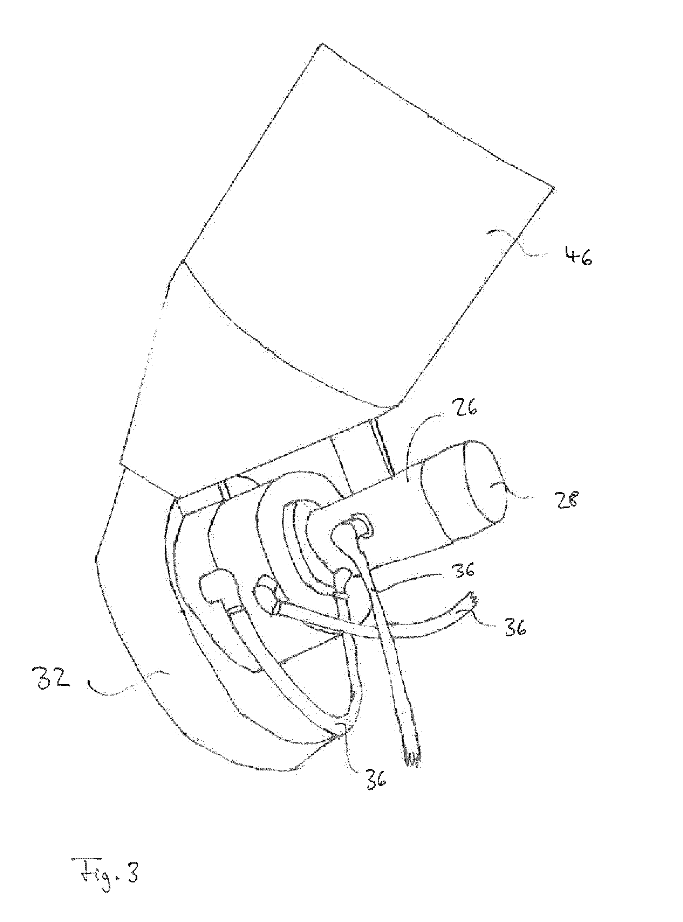

From Figure 3, which shows a perspective view of the X-ray source 10 of an exemplary embodiment of the X-ray testing device 1 according to the present disclosure, the electron beam generator housing 46 and the anode plate housing 32 connected therewith are apparent. Furthermore, the housing of the anode plate drive 28 disposed outside the anode plate housing 32 can be seen, as can the connections of an active cooling device 36 of the anode plate housing 32, which serve for letting a coolant flow through a coolant chamber 38 disposed in the anode plate housing.

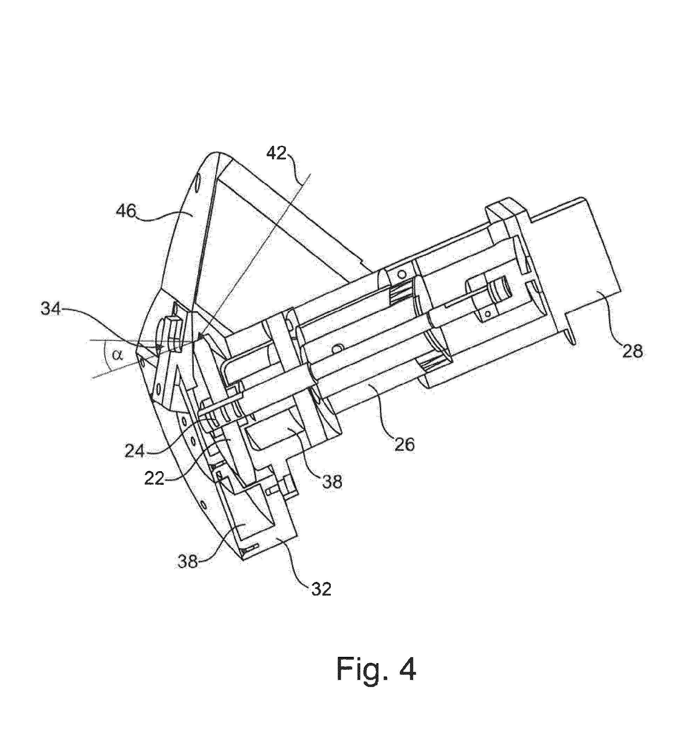

This coolant chamber 38 becomes apparent from the sectional view in accordance with Figure 4, which furthermore shows the rotary anode assembly 20, which consists of the anode plate 22, the shaft 24 and the anode plate drive 28. In this case, the anode plate drive 28 is disposed outside the anode plate housing 32, with the output shaft of the anode plate drive 28 being non-rotatably connected to the shaft 24 via a vacuum-tight rotary joint 26.

The anode plate housing 32 is also configured to be vacuum-tight, and is fluid-connected to the electron beam generator housing 46, which is also configured to be vacuum-tight, so that the anode plate housing 32 can also be evacuated via an evacuating unit 48 (not shown), e.g. a vacuum pump, which is connected to the electron beam generator housing 46.

Moreover, the anode plate housing 32 comprises an exit window 34 consisting of a material that has only a low absorption coefficient for the generated X-radiation. An X-ray bundle having an opening angle Alpha of typically 10° to 50°, preferably about 40°, exits from the exit window 34.

Various aspects and embodiments of the present invention are defined by the following numbered clauses:
1. An X-ray testing device (1) for material testing for generating high-resolution geometric projections of a test object (100) by means of X-ray beams, comprising
   a. a highly focusing X-ray source (10) comprising the following features:
      i. a rotary anode assembly (20) with a rotatably mounted anode plate (22) and an anode plate drive (28) which is configured to set the anode plate (22) into a rotary motion,
      ii. an electron gun (40) which is configured to generate a focused electron beam (42), and
      iii. an electron beam control unit (50), which comprises an electron beam deflecting unit (52) and a control unit (54), and which is configured to control the point of incidence (44) of the electron beam (42) generated by the electron gun (40) on the anode plate (22), and
   b. a bracket (102) for a test object (100), with the position of the bracket (102) relative to the rotary anode assembly (20) being fixed or capable of being fixed,
      wherein
   c. the rotary anode assembly (20) further comprises a rotational angle encoder (30) that is configured to detect the rotation angle Gamma of the anode plate (22), and
   d. the control unit (54) is configured for controlling the electron beam deflecting unit (52) depending on the detected rotation angle Gamma of the anode plate (22) in such a way that the positional change of the point of incidence (44) on the anode plate (22) relative to a reference point P on the bracket (102) located in a fixed position is minimized.
2. The X-ray testing device (1) according to clause 1, wherein
   a. it further comprises an X-ray detector (60) configured for recording X-radiation emitted by the X-ray source (10) after its passage though a test object (100) located in the bracket (102), in order to make a geometric projection of the test object (100) visible, and
   b. the control unit (54) is configured to minimize the positional change of the point of incidence (44) in such a way that as small a change as possible of the magnification and/or position of the geometric projection of the test object (100) on the X-ray detector (60) results over a typical exposure time of the X-ray detector (60).
3. The X-ray testing device (1) according to any preceding clause, wherein the control unit (54) is configured for minimizing the positional change of the point of incidence (44) by fluctuations in the distance between the point of incidence (44) and the reference point P being minimized.
4. The X-ray testing device (1) according to any preceding clause, wherein the control unit (54) is configured for minimizing the positional change of the point of incidence (44) by fluctuations in the angular position of the connecting line between the point of incidence (44) and the reference point P in space being minimized.
5. The X-ray testing device (1) according to any preceding clause, wherein the control unit (54) is configured for minimizing the positional change of the point of incidence (44) by the point of incidence (44) being moved along a straight line.
6. The X-ray testing device (1) according to any preceding clause, wherein the reference point P is located on the edge of a test object (100) located in the bracket (102).
7. The X-ray testing device (1) according to any preceding clause, wherein the reference point P is located in the geometric center of the edge of a test object (100) located in the bracket (102).
8. The X-ray testing device (1) according to any preceding clause, wherein the control unit (54) comprises a storage unit (56) in which information for controlling the electron beam deflecting unit (52) depending on the rotation angle Gamma of the anode plate (22) is stored.
9. The X-ray testing device (1) according to any preceding clause, wherein the inclination angle θ, which the axis of rotation D of the anode plate (22) includes with the direction of the electron beam (42) incident upon the anode plate (22), is no greater than 40°, preferably no greater than 35°, and in particular no greater than 30°.
10. The X-ray testing device (1) according to any preceding clause, wherein at least the anode plate (22) is disposed in a dismountable, vacuum-tight anode plate housing (32), which has an exit window (34) for the generated X-radiation, which permits the exit of a divergent X-ray beam with an opening angle α of at least 10°, preferably at least 30°, and particularly preferably 40° or more.
11. The X-ray testing device (1) according to any preceding clause, wherein at least the anode plate (22) is disposed in a dismountable, vacuum-tight anode plate housing (32) connected to a cooling device (36) which is designed for heat dissipation from the walls of the anode plate housing (32).
12. The X-ray testing device (1) according to any preceding clause, wherein the anode plate (22) and/or the inner wall of the anode plate housing (32) have a coating that permits a heat exchange, via radiation exchange, between the anode plate (22) and the inner wall of the anode plate housing (32) that is increased as compared with the uncoated anode plate (22) or anode plate housing (32).
13. The X-ray testing device (1) according to any preceding clause, wherein at least the anode plate (22) is disposed in a dismountable, vacuum-tight anode plate housing (32), which comprises a mechanical interface for an exchangeable, vacuum-tight connection to an electron beam generator housing (46), in which at least the electron gun (40), and preferably also the electron beam deflecting unit (52) are disposed.
14. The X-ray testing device (1) according to any preceding clause, wherein the anode plate housing (22) can be connected to the electron beam generator housing (46) in such a way that the anode plate housing (22) can be evacuated via an evacuating unit evacuating the electron beam generator housing (46).
15. The X-ray testing device (1) according to any preceding clause, wherein the anode plate drive (28) comprises an output shaft which is disposed collinear with the axis of rotation D of the anode plate (22).
16. The X-ray testing device (1) according to any preceding clause, wherein the axis of rotation of the output shaft coincides with the axis of rotation D of the anode plate (22).
17. The X-ray testing device (1) according to any preceding clause, wherein the anode plate drive (28) is disposed outside the anode plate housing (32) and the output shaft is non-rotatably connected to the anode plate (22) via a vacuum-tight rotary joint (26).
18. A method for generating high-resolution, geometric projections of a test object (100) by means of X-ray beams, comprising the following method steps:
   a. providing an X-ray testing device (1) according to claim 1,
   b. disposing the test object (100) in the bracket (102),
   c. radiation-penetrating the test object (100) with X-radiation emanating from the rotating anode plate (22),
   d. detecting the rotation angle Gamma of the anode plate (22) and controlling the electron beam deflecting unit (52) depending on the detected rotation angle Gamma in such a way that the positional change of the point of incidence (44) of the electron beam (42) on the anode plate (22) relative to a reference point P on the bracket (102) located in a fixed position is minimized.
19. A method for setting up an X-ray testing device (1) according to any preceding clause, comprising the following method steps:
   a. detecting the rotation angle-dependent positional change of the point of incidence (44) on the anode plate (22) relative to a reference point P on the bracket (102) located in a fixed position,
   b. determining the parameters that are suitable for controlling the electron beam deflecting unit (52) in such a way that the detected positional change of the point of incidence (44) during a rotation of the anode plate (22) is minimized, and
   c. storing these parameters in the storage unit (56) for recall by the control unit (54).
20. The method according to any preceding clause, wherein, for a minimization of the positional change, the parameters for the electron beam deflecting unit (52) are selected in such a way that the point of incidence (44) of the electron beam (42) on the anode plate (22) moves along a straight line after the application of the compensation determined by the selected parameters.

## Claims

1. An X-ray testing device (1) for material testing for generating high-resolution geometric projections of a test object (100) by means of X-ray beams, comprising
a. a highly focusing X-ray source (10) comprising the following features:
i. a rotary anode assembly (20) with a rotatably mounted anode plate (22) and an anode plate drive (28) which is configured to set the anode plate (22) into a rotary motion,
ii. an electron gun (40) which is configured to generate a focused electron beam (42), and
iii. an electron beam control unit (50), which comprises an electron beam deflecting unit (52) and a control unit (54), and which is configured to control the point of incidence (44) of the electron beam (42) generated by the electron gun (40) on the anode plate (22), and
b. a bracket (102) for a test object (100), with the position of the bracket (102) relative to the rotary anode assembly (20) being fixed or capable of being fixed,
c. the rotary anode assembly (20) further comprises a rotational angle encoder (30) that is configured to detect the rotation angle Gamma of the anode plate (22), and
d. the control unit (54) is configured for controlling the electron beam deflecting unit (52) depending on the detected rotation angle Gamma of the anode plate (22) in such a way that the positional change of the point of incidence (44) on the anode plate (22) relative to a reference point P on the bracket (102) located in a fixed position is minimized.

2. The X-ray testing device (1) according to claim 1, wherein
a. it further comprises an X-ray detector (60) configured for recording X-radiation emitted by the X-ray source (10) after its passage though a test object (100) located in the bracket (102), in order to make a geometric projection of the test object (100) visible, and
b. the control unit (54) is configured to minimize the positional change of the point of incidence (44) in such a way that as small a change as possible of the magnification and/or position of the geometric projection of the test object (100) on the X-ray detector (60) results over a typical exposure time of the X-ray detector (60).

3. The X-ray testing device (1) according to claim 1 or claim 2, wherein the control unit (54) is configured for at least one of:
minimizing the positional change of the point of incidence (44) by fluctuations in the distance between the point of incidence (44) and the reference point P being minimized;
minimizing the positional change of the point of incidence (44) by fluctuations in the angular position of the connecting line between the point of incidence (44) and the reference point P in space being minimized, and
minimizing the positional change of the point of incidence (44) by the point of incidence (44) being moved along a straight line.

4. The X-ray testing device (1) according to claim 1, 2 or 3, wherein:
the reference point P is located on the edge of a test object (100) located in the bracket (102), and/or
the reference point P is located in the geometric center of the edge of a test object (100) located in the bracket (102).

5. The X-ray testing device (1) according to any preceding claim, wherein the inclination angle θ, which the axis of rotation D of the anode plate (22) includes with the direction of the electron beam (42) incident upon the anode plate (22), is no greater than 40°, preferably no greater than 35°, and in particular no greater than 30°.

6. The X-ray testing device (1) according to aany preceding claim, wherein at least the anode plate (22) is disposed in a dismountable, vacuum-tight anode plate housing (32), which has an exit window (34) for the generated X-radiation, which permits the exit of a divergent X-ray beam with an opening angle α of at least 10°, preferably at least 30°, and particularly preferably 40° or more.

7. The X-ray testing device (1) according to any preceding claim, wherein at least the anode plate (22) is disposed in a dismountable, vacuum-tight anode plate housing (32) connected to a cooling device (36) which is designed for heat dissipation from the walls of the anode plate housing (32), ant wherein, preferably, the anode plate (22) and/or the inner wall of the anode plate housing (32) have a coating that permits a heat exchange, via radiation exchange, between the anode plate (22) and the inner wall of the anode plate housing (32) that is increased as compared with the uncoated anode plate (22) or anode plate housing (32).

8. The X-ray testing device (1) according to any preceding claim, wherein at least the anode plate (22) is disposed in a dismountable, vacuum-tight anode plate housing (32), which comprises a mechanical interface for an exchangeable, vacuum-tight connection to an electron beam generator housing (46), in which at least the electron gun (40), and preferably also the electron beam deflecting unit (52) are disposed, wherein preferably, the anode plate housing (22) can be connected to the electron beam generator housing (46) in such a way that the anode plate housing (22) can be evacuated via an evacuating unit evacuating the electron beam generator housing (46).

9. The X-ray testing device (1) according to any preceding claim, wherein the anode plate drive (28) comprises an output shaft which is disposed collinear with the axis of rotation D of the anode plate (22).

10. The X-ray testing device (1) according to claim 9, wherein the axis of rotation of the output shaft coincides with the axis of rotation D of the anode plate (22).

11. The X-ray testing device (1) according to claim 10, wherein the anode plate drive (28) is disposed outside the anode plate housing (32) and the output shaft is non-rotatably connected to the anode plate (22) via a vacuum-tight rotary joint (26).

12. The X-ray testing device (1) according to any preceding claim, wherein the control unit (54) comprises a storage unit (56) in which information for controlling the electron beam deflecting unit (52) depending on the rotation angle Gamma of the anode plate (22) is stored.

13. A method for generating high-resolution, geometric projections of a test object (100) by means of X-ray beams, comprising the following method steps:
a. providing an X-ray testing device (1) according to any preceding claim,
b. disposing the test object (100) in the bracket (102),
c. radiation-penetrating the test object (100) with X-radiation emanating from the rotating anode plate (22),
d. detecting the rotation angle Gamma of the anode plate (22) and controlling the electron beam deflecting unit (52) depending on the detected rotation angle Gamma in such a way that the positional change of the point of incidence (44) of the electron beam (42) on the anode plate (22) relative to a reference point P on the bracket (102) located in a fixed position is minimized.

14. A method for setting up an X-ray testing device (1) according to claim 12, comprising the following method steps:
a. detecting the rotation angle-dependent positional change of the point of incidence (44) on the anode plate (22) relative to a reference point P on the bracket (102) located in a fixed position,
b. determining the parameters that are suitable for controlling the electron beam deflecting unit (52) in such a way that the detected positional change of the point of incidence (44) during a rotation of the anode plate (22) is minimized, and
c. storing these parameters in the storage unit (56) for recall by the control unit (54).

15. The method according to claim 14, wherein, for a minimization of the positional change, the parameters for the electron beam deflecting unit (52) are selected in such a way that the point of incidence (44) of the electron beam (42) on the anode plate (22) moves along a straight line after the application of the compensation determined by the selected parameters.
